# EUROPEAN PATENT APPLICATION

(11) **EP 4 703 834 A1**
(43) Date of publication of application: **04.03.2026**
(21) Application number: 25199495.0
(22) Date of filing: 02.09.2025
(51) Int. Cl.: G05D 1/248, G05D 107/20, G05D 105/15, G05D 1/229, G05D 1/648

(54) **AUTONOMOUS TRAVELING METHOD, WORK VEHICLE, AND AUTONOMOUS TRAVELING SYSTEM**

(30) Priority: 03.09.2024 JP 2024151458
(71) Applicant: Yanmar Holdings Co., Ltd., Osaka-shi, Osaka (JP)
(72) Inventor: SUZUKI, Hidetaka, Okayama (JP)
(74) Representative: Sekiguchi, Kazuya

(57) **Abstract**

[Problem] To provide an autonomous traveling method, a work vehicle, and an autonomous traveling system capable of performing appropriate autonomous travel based on an appropriate reference orientation without being affected by a deviation in position information with a lapse of time.

[Solution] A tractor 1 that performs autonomous straight travel according to a reference orientation 103 set based on a first reference position 101 and a second reference position 102, and includes a reference information updating unit 38 that updates the first reference position 101 and the second reference position 102 when the autonomous straight travel is performed, and updates the reference orientation 103 based on the updated first reference position 101 and second reference position 102.

## Description

### TECHNICAL FIELD

The present invention relates to an autonomous traveling method for a work vehicle which performs autonomous travel according to a reference orientation set based on a first reference position and a second reference position, the work vehicle, and an autonomous traveling system.

### BACKGROUND ART

Conventionally, a work vehicle such as a tractor or a combine harvester performs autonomous travel (autonomous straight travel) based on, for example, a straight reference orientation (reference line) connecting predetermined two points (a first reference position and a second reference position) in a field. The work vehicle sets the first reference position and the second reference position in the field in manual travel before performing the autonomous travel, and acquires coordinates as position information on the first reference position and the second reference position.

For example, in a combine harvester disclosed in Patent Document 1, an own vehicle position of the combine harvester is set as a point A (first reference position) according to a selecting manipulation of a point A setting button, and the own vehicle position of the combine harvester is set as a point B (second reference position) according to a selecting manipulation of a point B setting button. In this combine harvester, the set point A and point B are determined according to a selecting manipulation of a reference line determination button, and a reference line (reference orientation) of a straight line connecting the point A and the point B is calculated. The combine harvester performs work by an autonomous straight travel along a working course parallel to the reference line including the point A and the point B as an autonomous reaping travel.

### PRIOR ART DOCUMENT

### PATENT DOCUMENT

Patent Document 1: Japanese Unexamined Patent Publication No. 2023-056265

### SUMMARY OF INVENTION

### TECHNICAL PROBLEM

However, in a work vehicle, when position information is acquired by a satellite positioning system such as a GNSS, a deviation (drift) in the position information (coordinate) occurs with a lapse of time, and a position at which the first reference position or the second reference position is actually set is deviated from position information in a stored (registered) first reference position or second reference position. In this case, a reference orientation referred to in the autonomous straight travel is deviated from an initially set reference orientation. Therefore, a travel route of an autonomous straight travel performed according to the set reference orientation may not be parallel to the initially set reference orientation or an actual work trajectory based on the reference orientation, or may not be at equal intervals.

An object of the present invention is to provide an autonomous traveling method, a work vehicle, and an autonomous traveling system capable of performing appropriate autonomous travel based on an appropriate reference orientation without being affected by a deviation in position information with a lapse of time.

### SOLUTION TO PROBLEM

In order to solve the above problem, an autonomous traveling method according to the present invention is an autonomous traveling method for a work vehicle that performs autonomous travel according to a reference orientation set based on a first reference position and a second reference position, the method including: an updating step of updating the first reference position and the second reference position when the autonomous travel is performed, and updating the reference orientation based on the updated first reference position and second reference position.

In addition, in order to solve the above problem, a work vehicle according to the present invention is a work vehicle that performs autonomous travel according to a reference orientation set based on a first reference position and a second reference position, the work vehicle including: a reference information updating unit that updates the first reference position and the second reference position when the autonomous travel is performed, and updates the reference orientation based on the updated first reference position and second reference position.

Further, in order to solve the above problem, an autonomous traveling system according to the present invention is an autonomous traveling system for a work vehicle that performs autonomous travel according to a reference orientation set based on a first reference position and a second reference position, the autonomous traveling system including: a reference information updating unit that updates the first reference position and the second reference position when the autonomous travel is performed, and updates the reference orientation based on the updated first reference position and second reference position.

### ADVANTAGEOUS EFFECTS OF INVENTION

The present invention provides an autonomous traveling method, a work vehicle, and an autonomous traveling system capable of performing appropriate autonomous travel based on an appropriate reference orientation without being affected by a deviation in position information with a lapse of time.

### BRIEF DESCRIPTION OF DRAWINGS

FIG. 1 is a side view illustrating an example of a tractor according to an embodiment of the present invention.
FIG. 2 is a block diagram of the tractor according to the embodiment of the present invention.
FIG. 3 is a plan view illustrating an example of a field to be worked on by the tractor according to the embodiment of the present invention.
FIG. 4 is a plan view illustrating an example of a field to be worked on by the tractor according to the embodiment of the present invention.
FIG. 5 is a plan view illustrating an example of a field to be worked on by the tractor according to the embodiment of the present invention.
FIG. 6 is a flowchart illustrating an exemplary autonomous straight travel operation in the tractor according to the embodiment of the present invention.

### DESCRIPTION OF EMBODIMENTS

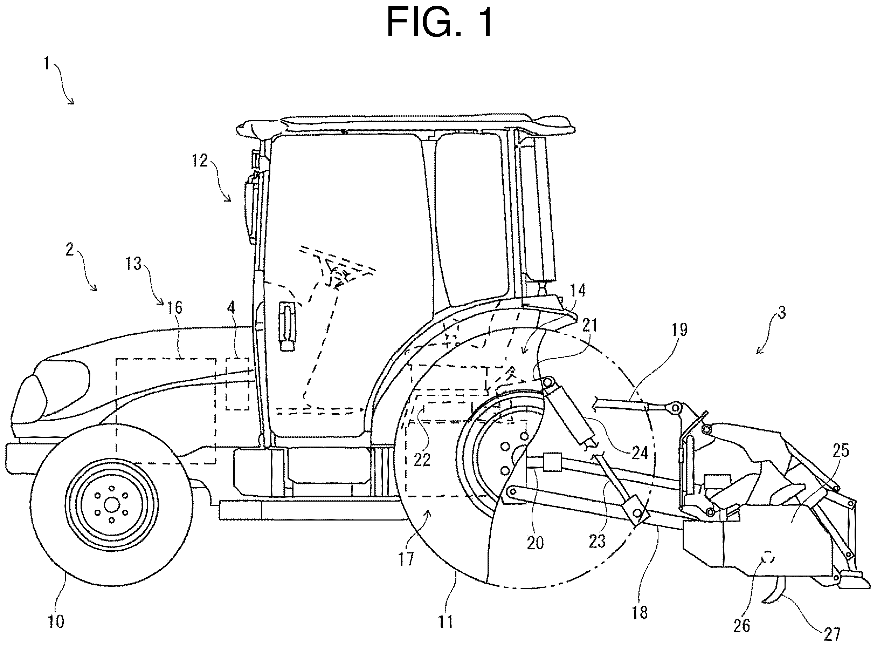

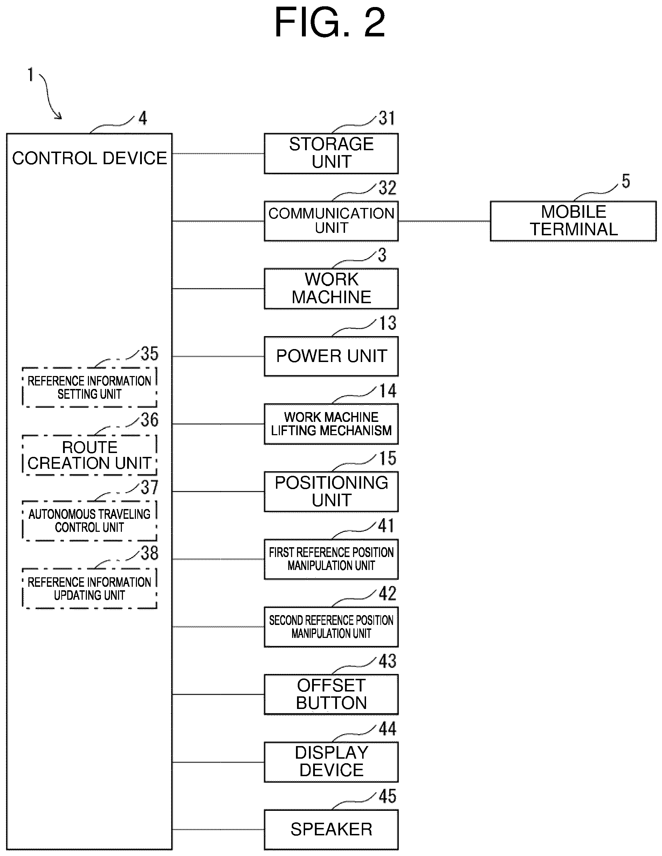

A work vehicle of the present invention performs work travel in which work is performed by a work machine while traveling in a field by an autonomous drive or a manual manipulation. As an example of a work vehicle according to an embodiment of the present invention, a tractor 1 will be described with reference to FIG. 1, etc. As illustrated in FIG. 1, the tractor 1 includes a vehicle body 2 and a work machine 3, and is configured so as to perform work, such as tilling, by the work machine 3, with traveling by the vehicle body 2. In the tractor 1, the work machine 3 to perform a variety of works, such as a rotary, a harrow, a loader, a plough, and a box scraper, are mounted on the vehicle body 2 as appropriate. As illustrated in FIG. 2, the tractor 1 includes a control device 4 that controls an operation of each unit.

The tractor 1 is set to a traveling mode of either a manual travel mode or an autonomous travel mode. When the manual travel mode is set, the tractor 1 performs manual travel in the field according to the operations of various manipulation tools (a steering wheel, an accelerator pedal, a shift lever, and the like) performed by an operator.

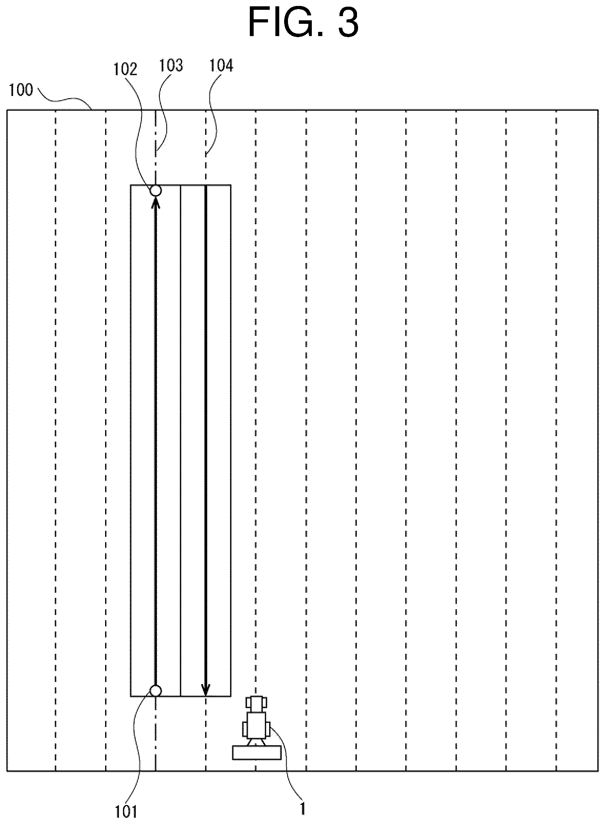

When the autonomous travel mode is set, in order to perform autonomous travel (autonomous straight travel), the tractor 1 sets a first reference position 101 and a second reference position 102 in a field 100 as basic information in the autonomous straight travel as illustrated in FIG. 3. The tractor 1 sets a reference orientation 103 based on the set first reference position 101 and second reference position 102 as basic information in the autonomous straight travel, and performs the autonomous straight travel based on the set reference orientation 103.

At this time, the control device 4 controls vehicle speed, steering, and the like of the tractor 1 such that the tractor 1 performs an autonomous straight travel in parallel with the predetermined straight reference orientation 103 (reference line) set in the field 100. The tractor 1 may create a travel route 104 with a predetermined interval in parallel with the set reference orientation 103, and perform the autonomous straight travel according to the travel route 104. In FIG. 3, the reference orientation 103 is indicated by a dash-dotted line, the travel route 104 created based on the reference orientation 103 is indicated by a broken line, and a travel trajectory of the tractor 1 is indicated by a solid line with an arrow indicating a travel direction.

For example, the predetermined interval is calculated by multiplying a work width of the tractor 1 by the number of courses (the number of straight routes) from the reference orientation 103. Specifically, for the travel route 104 adjacent to the reference orientation 103, the number of courses is 1, and thus the tractor 1 performs the autonomous straight travel according to the travel route 104 with an interval corresponding to the work width from the reference orientation 103. Alternatively, the tractor 1 may perform the autonomous straight travel to travel while adjusting an own vehicle position so as to have the predetermined interval from the set reference orientation 103.

Alternatively, when the autonomous travel mode is set, the tractor 1 may be controlled by the control device 4 to perform, instead of the autonomous straight travel, an autonomous travel such as a reciprocating travel in which the tractor 1 travels back and forth along a plurality of straight paths in the field 100, or a spiral square travel in which the tractor 1 repeats traveling along a straight route while shifting a route from the center side to the outer side in the field 100.

A pair of left and right front wheels 10 is provided on the lower front portion of the vehicle body 2. A pair of left and right rear wheels 11 is provided on the lower rear portion of the vehicle body 2. A cabin 12 for an operator to board is provided on the upper portion of the vehicle body 2. A driver's seat and various manipulation tools (a steering wheel, an accelerator pedal, a shift lever, and the like) are provided inside the cabin 12.

In particular, in the present embodiment, as illustrated in FIG. 2, the tractor 1 includes at least a first reference position manipulation unit 41 for manipulating the setting of the first reference position 101 and a second reference position manipulation unit 42 for manipulating the setting of the second reference position 102 as operation tools for performing an operation of the autonomous straight travel. For example, the first reference position manipulation unit 41 and the second reference position manipulation unit 42 may be attached in the vicinity of a driver's seat so as to be operated by a worker sitting on the driver's seat, or may be provided in an external device such as a mobile terminal 5 possessed by the worker.

The first reference position manipulation unit 41 transmits an instruction to set the first reference position 101 to the control device 4 in response to a setting operation such as a pressing operation, and in the control device 4, an own vehicle position of the tractor 1 is set as the first reference position 101. The second reference position manipulation unit 42 transmits an instruction to set the second reference position 102 to the control device 4 in response to a setting operation such as a pressing operation, and in the control device 4, an own vehicle position of the tractor 1 is set as the second reference position 102.

In addition, as illustrated in FIG. 2, the tractor 1 includes an offset button 43 for shifting (parallel movement) by an offset value in the autonomous straight travel. For example, the offset button 43 may be attached in the vicinity of a driver's seat to allow a worker sitting on the driver's seat to manipulate the offset button 43, or may be provided in an external device such as a mobile terminal 5 possessed by the worker.

The vehicle body 2 is provided with a power unit 13, a work machine lifting mechanism 14, a positioning unit 15 (see FIG. 2), and the control device 4.

The power unit 13 includes an engine 16, a gearshift device 17, and another component, and power of the engine 16 is shifted by the gearshift device 17 and transmitted to each of the front wheels 10 and each of the rear wheels 11. The rear of the gearshift device 17 has connection to a left-and-right-pair of lower links 18, a top link 19, and a PTO shaft 20, and the work machine 3 is joined to the rear ends of each of the lower links 18, the top link 19, and the PTO shaft 20, and driven by the PTO shaft 20.

The work machine lifting mechanism 14 includes a left-and-right-pair of lift arms 21, and a lift cylinder 22 configured by a hydraulic cylinder. The front end portion of one lift arm 21 is joined to one lower link 18 via a link member 23. The front end portion of the other lift arm 21 is joined to the other lower link 18 via a rolling cylinder 24. The work machine lifting mechanism 14 is capable of changing the height of the work machine 3 supported by the vehicle body 2 by driving the lift cylinder 22.

The work machine 3 includes, for example, a rotary, and has a tilling cover 25 extending in left and right directions. A tillage rotating shaft 26 having a rotating shaft extending in the left-right direction is rotatably attached to the tilling cover 25. The tillage rotating shaft 26 is rotated by the power transmitted from the PTO shaft 20. A plurality of tillage claws 27 are provided on the tillage rotating shaft 26, which are provided spaced apart in the left-right direction.

The work machine 3 is configured such that the tillage claw 27 together with the tillage rotating shaft 26 rotates against and tills soil of the field 100.

The positioning unit 15 is configured to use a satellite positioning system such as GNSS to acquire position information (positioning point) of the tractor 1, and receives a positioning signal from a positioning satellite via a positioning antenna, and acquires position information on the positioning unit 15, i.e., position information on the tractor 1, based on the positioning signal.

Next, a control device 4 will be described. The control device 4 includes a computer such as a CPU, and as illustrated in FIG. 2, is connected to a storage unit 31 such as a ROM, a RAM, a hard disk drive, or a flash memory, and to a communication unit 32 that communicates with an external device.

The storage unit 31 stores a program and data for controlling various components and various functions of the tractor 1. As a result of the control device 4 executing arithmetic processing based on the program and the data stored in the storage unit 31, the various components and the various functions are controlled. The control device 4, for example, controls the positioning unit 15 to acquire the own vehicle position of the tractor 1.

The storage unit 31 stores field information of the field 100 which is a work target of the tractor 1, and the field information includes, for example, a shape, a size, and position information (coordinates and the like) of a field end constituting a field outer periphery, and a shape, a size, and position information (coordinates and the like) of a work area of the field 100. The field information also includes information such as the shape, size, and position information (coordinates and the like) of an unworked region where work has not yet been performed and an already worked region where work has already been completed. In particular, in the present embodiment, the storage unit 31 stores, as information used for the autonomous straight travel, at least position information on a first reference position 101 and a second reference position 102 set in the field 100, and position information on a straight reference orientation 103 (reference line) passing through the first reference position 101 and the second reference position 102.

The communication unit 32 is enabled to wirelessly communicate with an external device, such as a mobile terminal 5 possessed by the worker, via a wireless communication antenna. The control device 4 controls the communication unit 32 to perform wireless communication with the mobile terminal 5, and transmits and receives various kinds of information to and from the mobile terminal 5.

The mobile terminal 5 is one of components of the tractor 1, and is a terminal capable of remotely manipulating the tractor 1. For example, the mobile terminal 5 is configured by a tablet terminal provided with a touch panel, or a laptop personal computer.

The control device 4 operates as a reference information setting unit 35, a route creation unit 36, an autonomous traveling control unit 37, and a reference information updating unit 38 by executing a program stored in the storage unit 31. The reference information setting unit 35, the route creation unit 36, the autonomous traveling control unit 37, and the reference information updating unit 38 realize a reference information setting step, a route creation step, an autonomous traveling control step, and a reference information updating step of the autonomous traveling method according to the present invention.

The reference information setting unit 35 sets basic information on the autonomous straight travel when the tractor 1 performs the manual travel in the field 100. In the tractor 1, normally, in the course of the manual travel in which the reference orientation 103 is set for the autonomous straight travel, the first reference position 101 is set at the start stage of the straight travel, and the second reference position 102 is set at the end stage of the straight travel. The reference information setting unit 35 sets the first reference position 101 and the second reference position 102 in the field 100 according to the manipulation of the worker.

For example, the reference information setting unit 35 acquires the own vehicle position of the tractor 1 by the positioning unit 15 according to the setting operation of the first reference position manipulation unit 41, and stores and sets the own vehicle position as the first reference position 101 in the storage unit 31. The reference information setting unit 35 acquires the own vehicle position of the tractor 1 by the positioning unit 15 according to the setting manipulation of the second reference position manipulation unit 42, and stores and sets the own vehicle position as the second reference position 102 in the storage unit 31.

After setting the first reference position 101, the reference information setting unit 35 may be able to set the second reference position 102 by receiving the setting manipulation of the second reference position manipulation unit 42 using a case where the own vehicle position of the tractor 1 is separated from the first reference position 101 by a predetermined distance or more as a setting condition of the second reference position 102.

In addition, in response to the completion of setting of the second reference position 102, the reference information setting unit 35 creates a straight reference orientation 103 (reference line) passing through the first reference position 101 and the second reference position 102 based on the set first reference position 101 and second reference position 102, and stores and sets the reference orientation 103 in the storage unit 31. After setting the second reference position 102, the reference information setting unit 35 may be able to set the reference orientation 103 using a case where the first reference position 101 and the second reference position 102 are separated from each other by a predetermined distance or more as a setting condition of the reference orientation 103.

The route creation unit 36 creates a travel route 104 based on the reference orientation 103 set by the reference information setting unit 35. For example, the route creation unit 36 creates a plurality of travel routes 104 that are straight lines parallel to the reference orientation 103 and are arranged at intervals of the work widths from the reference orientation 103. Alternatively, the route creation unit 36 creates a plurality of travel routes 104 that are straight lines parallel to the reference orientation 103 and include a straight line passing through the own vehicle position of the tractor 1 and a plurality of straight lines arranged at intervals of the work widths from the straight line. Alternatively, the route creation unit 36 may create travel routes 104 including only straight lines that are parallel to the reference orientation 103 and pass through the own vehicle position of the tractor 1.

The autonomous traveling control unit 37 controls the power unit 13 and the work machine 3 to control vehicle speed, steering, and the like of the tractor 1 such that the tractor 1 performs the autonomous straight travel parallel to a straight reference orientation 103 set in the field 100. The autonomous traveling control unit 37 may control the autonomous straight travel according to a travel route 104 created in parallel with the set reference orientation 103, or may control the autonomous straight travel such that the tractor 1 travels while adjusting the own vehicle position so as to have a predetermined interval from the set reference orientation 103. Hereinafter, an example in which the tractor 1 performs the autonomous straight travel according to a travel route 104 parallel to the reference orientation 103 will be described.

For example, when the tractor 1 satisfies a start condition of the autonomous straight travel, the autonomous traveling control unit 37 acquires the travel route 104 based on the reference orientation 103 according to the start instruction of the autonomous straight travel, and performs the autonomous straight travel such that the tractor 1 travels straight along the travel route 104 based on the position information on the tractor 1 measured by the positioning unit 15.

The autonomous traveling control unit 37 sets, as the start condition, for example, a condition that the first reference position 101, the second reference position 102, and the reference orientation 103 are set, a condition that the travel route 104 is created based on the reference orientation 103, a condition that the tractor 1 is located within a predetermined distance and within a predetermined orientation from the travel route 104 (for example, the designated travel route 104 or the travel route 104 closest to the tractor 1), and the like.

In addition, in response to the manipulation of the offset button 43, the autonomous traveling control unit 37 performs an offset operation of obliquely moving the tractor 1 from the travel trajectory in order to change the position of the vehicle body in the left-right direction by translating (shifting) the tractor 1 by an amount corresponding to the set route offset target value.

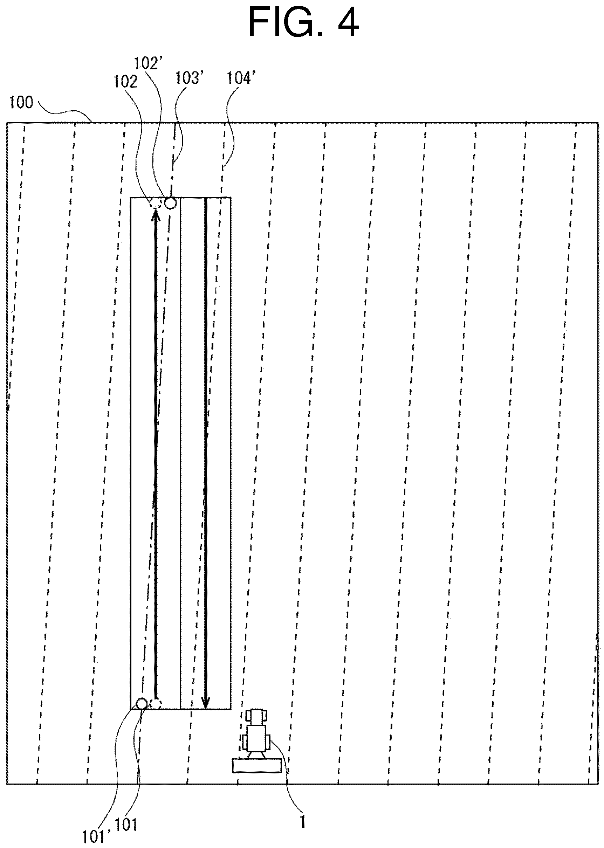

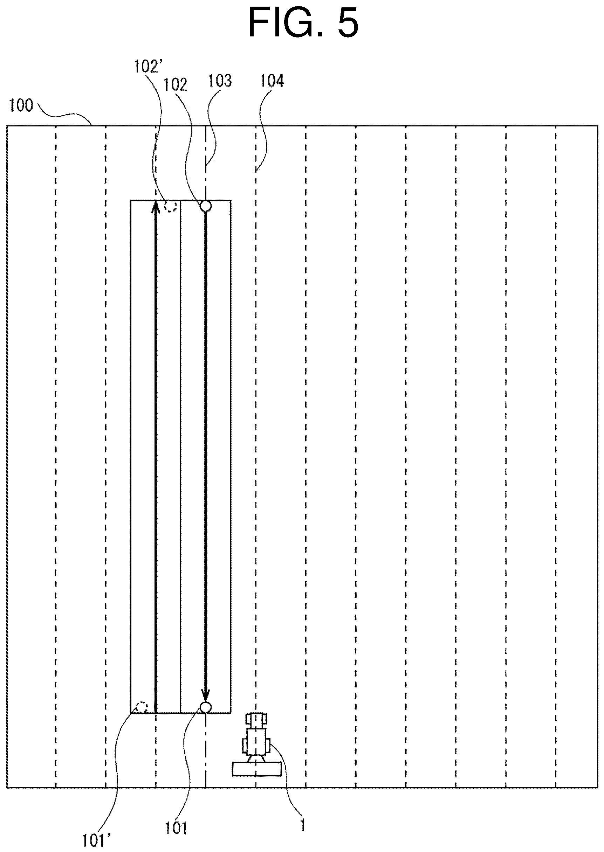

When the tractor 1 performs the autonomous straight travel, the reference information updating unit 38 updates the set first reference position 101 and second reference position 102, and updates the set reference orientation 103 based on the updated first reference position 101 and second reference position 102. In the tractor 1, after the first reference position 101 and the second reference position 102 of which the position information is acquired by the positioning unit 15 are set, a deviation (drift) of the position information (coordinates) may occur with a lapse of time. In this case, as illustrated in FIG. 4, the positions at which the first reference position 101 and the second reference position 102 are actually set and the position information on the stored (registered) first reference position 101' and second reference position 102' are deviated from each other, and as a result the reference orientation 103' and the travel route 104' are deviated from each other. **In** order to address such a deviation of the position information, as illustrated in FIG. 5, the reference information updating unit 38 updates the original first reference position 101' and second reference position 102' to the first reference position 101 and the second reference position 102 based on the actual travel trajectory, and updates the reference orientation 103, and the route creation unit 36 creates the travel route 104 based on the updated reference orientation 103.

In the autonomous straight travel on the travel route 104 based on the reference orientation 103, the reference information updating unit 38 acquires the position information on the first reference position 101 to be updated at the start stage of the straight travel, and acquires the position information on the first reference position 101 to be updated at the end stage of the straight travel.

Specifically, the reference information updating unit 38 updates the first reference position 101 and the second reference position 102 according to a predetermined update timing in the autonomous straight travel on the travel route 104 based on the reference orientation 103, and updates the reference orientation 103 according to the update of the first reference position 101 and the second reference position 102.

The reference information updating unit 38 sets the time when the first operation of the tractor 1 is performed or the time when the first manipulation is performed as the update timing of the first reference position 101, and updates the first reference position 101 by the position information on the tractor 1 acquired when the first operation or the first manipulation is performed. Here, the first operation of the tractor 1 is, for example, a lowering operation of the work machine 3 or a starting operation of autonomous travel, and the first manipulation of the tractor 1 is, for example, a lowering manipulation of the work machine 3 or a starting manipulation of autonomous travel. When the work machine 3 is autonomously lowered in conjunction with the starting manipulation of autonomous travel, the starting manipulation of autonomous travel or the lowering operation of the work machine 3 is set as the update timing of the first reference position 101.

The reference information updating unit 38 sets the time when the second operation of the tractor 1 is performed or the time when the second manipulation is performed as the update timing of the second reference position 102, and updates the second reference position 102 by the position information on the tractor 1 acquired when the second operation or the second manipulation is performed. Here, the second operation of the tractor 1 is, for example, a raising operation of the work machine 3 or an ending operation of autonomous travel, and the second manipulation of the tractor 1 is, for example, a raising manipulation of the work machine 3 or an ending manipulation of autonomous travel. When the work machine 3 is autonomously raised in conjunction with the ending manipulation of autonomous travel, the ending manipulation of autonomous travel or the raising operation of the work machine is set as the update timing of the first reference position 101.

Further, when the tractor 1 performs the autonomous straight travel, the reference information updating unit 38 updates the first reference position 101 and the second reference position 102 according to the above update timing every predetermined period. Here, the reference information updating unit 38 may acquire the position information on the first reference position 101 and the second reference position 102 as a course in which the travel route 104 on which the autonomous straight travel is performed is to be updated when the predetermined period elapses, or may acquire the position information on the first reference position 101 and the second reference position 102 as a course in which the next travel route 104 following the travel route 104 on which the autonomous straight travel is performed is to be updated when the predetermined period elapses. That is, the predetermined period defines a timing condition for determining the travel route 104 (course) in which the position information on the first reference position 101 and the second reference position 102 is acquired for update.

For example, the reference information updating unit 38 updates the first reference position 101 and the second reference position 102 every time the autonomous straight travel is started as the predetermined period. At this time, the reference information updating unit 38 sets the time when the autonomous straight travel is started on the travel route 104 adjacent to the reference orientation 103 (the first course adjacent to the reference orientation 103) as the time when the predetermined period elapses, and updates the first reference position 101 and the second reference position 102 according to the update timing on the travel route 104. That is, the reference information updating unit 38 updates the first reference position 101 and the second reference position 102 for each travel route 104.

Alternatively, as the predetermined period, the reference information updating unit 38 updates the first reference position 101 and the second reference position 102 every time the autonomous travel on the predetermined number of travel routes 104 based on the reference orientation 103 is ended and the autonomous straight travel on the next travel route 104 is started. At this time, when the predetermined number is n (integer), the reference information updating unit 38 sets the time when the autonomous straight travel is started on the (n+1)th travel route 104 (course) from the reference orientation 103 as the time when the predetermined period elapses, and updates the first reference position 101 and the second reference position 102 according to the update timing on the travel route 104. The predetermined number may be a number set in advance, or may be a number set according to any manipulation by the worker. That is, the reference information updating unit 38 updates the first reference position 101 and the second reference position 102 for each of n+1 travel routes 104.

Alternatively, the reference information updating unit 38 updates the first reference position 101 and the second reference position 102 every time a first predetermined time elapses since the time of the previous setting of the first reference position 101 and the second reference position 102 as the predetermined period. At this time, the reference information updating unit 38 may update the first reference position 101 and the second reference position 102 according to the update timing on the travel route 104 on which the autonomous straight travel is performed when the first predetermined time elapses, or may update the first reference position 101 and the second reference position 102 according to the update timing on the next travel route 104 following the travel route 104 on which the autonomous straight travel is performed when the first predetermined time elapses.

Here, the time of the previous setting of the first reference position 101 and the second reference position 102 includes the time of the previous updating of the first reference position 101 and the second reference position 102. The time of the previous setting (updating) of the first reference position 101 and the second reference position 102 is the time when the setting (updating) of the first reference position 101 and the second reference position 102 is completed last time, that is, the time when the setting (updating) of the second reference position 102 is completed. Instead of the time of the previous setting of the first reference position 101 and the second reference position 102, the time of the previous setting (updating) of the reference orientation 103 may be used. The first predetermined time may be a time set in advance based on a predicted time of occurrence of a deviation (drift) of the position information (coordinates) measured by the positioning unit 15, or may be a time set according to any manipulation by the worker.

Meanwhile, when the second predetermined time elapses beyond the first predetermined time without the first reference position 101 and the second reference position 102 being updated since the time of the previous setting the first reference position 101 and the second reference position 102, it can be estimated that the first operation or the first manipulation for updating the first reference position 101 or the second operation or the second manipulation for updating the second reference position 102 has not been performed at the time of updating associated with the elapse of the first predetermined time. In this case, it can be estimated that the predicted time of the occurrence of the deviation (drift) of the position information (coordinates) measured by the positioning unit 15 is exceeded.

For example, such a situation may occur when the worker temporarily interrupts the work by the autonomous straight travel on the way.

Therefore, when a second predetermined time longer than the first predetermined time elapses since the time of the previous setting of the first reference position 101 and the second reference position 102, the reference information updating unit 38 issues notification for prompting the update of the first reference position 101 and the second reference position 102 by manual travel.

The reference information updating unit 38 may issue notification for prompting the update by screen display using the display device 44 included in the tractor 1 or audio output by the speaker 45 included in the tractor 1. In addition, the reference information updating unit 38 may issue notification for prompting the update by screen display using a display device included in the mobile terminal 5 communicably connected to the tractor 1 or audio output using a speaker included in the mobile terminal 5. The second predetermined time may be a time set in advance based on a predicted time of occurrence of a deviation (drift) of the position information (coordinates) measured by the positioning unit 15, or may be a time set according to any manipulation by the worker. The second predetermined time may be set such that a difference from the first predetermined time is equal to or longer than a travel time corresponding to one or two travel routes 104 based on the reference orientation 103 set last time.

Since the reference information updating unit 38 can estimate that the deviation of the position information measured by the positioning unit 15 occurs due to the elapse of the second predetermined time, the autonomous traveling control unit 37 may prohibit the start of the autonomous straight travel when the first reference position 101 and the second reference position 102 are not updated by the manual travel.

Further, when the tractor 1 performs the autonomous straight travel, the reference information updating unit 38 updates the first reference position 101 and the second reference position 102 when a predetermined permission condition is satisfied in addition to the above-described condition of the predetermined period and the update timing. Here, the reference information updating unit 38 may store the first position information acquired for the first reference position 101 and the second position information acquired for the second reference position 102, and may update the first position information and the second position information as the first reference position 101 and the second reference position 102, respectively, in a case where the permission condition is satisfied. In addition, when a predetermined number or more of travel routes 104 are passed without satisfying the permission condition, the reference information updating unit 38 may issue notification for prompting update of the first reference position 101 and the second reference position 102 by manual travel.

For example, when the position information on the first reference position 101 and the second reference position 102 satisfying the condition of the update timing described above is acquired in the travel route 104 to be updated satisfying the condition of the predetermined period described above, the reference information updating unit 38 may set the distance between the first reference position 101 and the second reference position 102 being equal to or greater than a predetermined length as the permission condition.

As a premise of such a permission condition, when the newly acquired distance between the first reference position 101 and the second reference position 102 is too short, a straight line passing through the first reference position 101 and the second reference position 102 may not be parallel to the desired reference orientation 103. Therefore, when the newly acquired distance between the first reference position 101 and the second reference position 102 is too short, the reference information updating unit 38 determines that the calculation of the position of the first reference position 101 or the second reference position 102 and the reference orientation 103 is inappropriate, and does not update the first reference position 101 and the second reference position 102 and does not update the reference orientation 103. The predetermined length may be a length set in advance, may be a length calculated from a predetermined ratio with respect to the distance between the first reference position 101 and the second reference position 102 set first, or may be a length set according to any manipulation by the worker.

In addition, when the position information on the first reference position 101 and the second reference position 102 satisfying the above-described update timing condition is acquired in the travel route 104 to be updated satisfying the above-described predetermined period condition, the reference information updating unit 38 may set a permission condition that the travel trajectory from the first reference position 101 to the second reference position 102 has meandering within a predetermined range with respect to the straight line connecting the first reference position 101 and the second reference position 102, and is recognized as a straight line. Here, meandering within the predetermined range includes being within an error range of positioning accuracy with respect to the straight line connecting the first reference position 101 and the second reference position 102, and may include being within a predetermined separation distance, being oblique within a predetermined angle, and the like.

As a premise of such a permission condition, when the newly acquired travel trajectory from the first reference position 101 to the second reference position 102 is largely meandering, a straight line passing through the first reference position 101 and the second reference position 102 may not be parallel to the desired reference orientation 103. Therefore, the reference information updating unit 38 does not update the first reference position 101 and the second reference position 102 when there is meandering that largely deviates from the straight line connecting the first reference position 101 and the second reference position 102 in the travel route 104 to be updated.

In addition, when the position information on the first reference position 101 and the second reference position 102 satisfying the above-described update timing condition is acquired in the travel route 104 to be updated satisfying the above-described predetermined period condition, the reference information updating unit 38 may set, as the permission condition, that a temporary stop is not performed in the autonomous straight travel from the first reference position 101 to the second reference position 102.

Here, the temporary stop is a state in which the travel is stopped while the work machine 3 is lowered.

As a premise of such a permission condition, when the temporary stop is performed between the newly acquired first reference position 101 and the second reference position 102, there may be a deviation in the position information measured by the positioning unit 15. Therefore, when the temporary stop is performed between the first reference position 101 and the second reference position 102 on the travel route 104 to be updated, the reference information updating unit 38 does not update the first reference position 101 and the second reference position 102.

In addition, when the position information on the first reference position 101 and the second reference position 102 satisfying the above-described update timing condition is acquired in the travel route 104 to be updated satisfying the above-described predetermined period condition, the reference information updating unit 38 may set, as the permission condition, that the raising operation and the lowering operation of the work machine 3 are not performed more than a predetermined number of times in an intermediate stage of the autonomous straight travel.

As a premise of such a permission condition, when the raising operation and the lowering operation of the work machine 3 are repeatedly performed, there is a possibility that travel and work different from desired autonomous straight travel according to the set reference orientation 103 are performed. Therefore, the reference information updating unit 38 does not update the first reference position 101 and the second reference position 102 when the raising operation and the lowering operation of the work machine 3 are performed more than a predetermined number of times between the first reference position 101 of the start stage and the second reference position 102 of the end stage on the travel route 104 to be updated. The reference information updating unit 38 may count a combination of the raising operation and the lowering operation of the work machine 3 as one time with respect to a predetermined number of times.

As described above, the raising operation of the work machine 3 is the second operation of the tractor 1 serving as the update timing of the second reference position 102, and the lowering operation of the work machine 3 is the first operation of the tractor 1 serving as the update timing of the first reference position 101. Therefore, in the travel route 104 of the autonomous straight travel, the reference information updating unit 38 acquires the first reference position 101 according to the first operation or the first manipulation of the tractor 1 at the start stage, and acquires the second reference position 102 according to the second operation or the second manipulation of the tractor 1 at the end stage. Additionally, even if the work machine 3 performs the raising operation and the lowering operation in the intermediate stage, the second reference position 102 and first reference position 101 in the intermediate stage are acquired.

At this time, when the number of times of the raising operation and the lowering operation of the work machine 3 in the intermediate stage is equal to or less than a predetermined number of times, the reference information updating unit 38 may regard the raising operation and the lowering operation of the work machine 3 in the intermediate stage as the update timing of the second reference position 102 and the update timing of the first reference position 101, set a plurality of reference lines sequentially connecting the first reference position 101 and the second reference position 102 based on the first reference position 101 in the start stage, the second reference position 102 and the first reference position 101 in the intermediate stage, and the second reference position 102 in the end stage, and set the straight reference orientation 103 based on the plurality of reference lines.

Alternatively, the reference information updating unit 38 may set the straight reference orientation 103 by the first reference position 101 in the start stage and the second reference position 102 in the end stage without regarding the raising operation and the lowering operation of the work machine 3 in the intermediate stage as the update timing of the second reference position 102 and the update timing of the first reference position 101.

Further, when the position information on the first reference position 101 and the second reference position 102 satisfying the above-described update timing condition is acquired in the travel route 104 to be updated satisfying the above-described predetermined period condition, the reference information updating unit 38 may set, as the permission condition, that the offset manipulation or the offset operation is not performed in the autonomous straight travel from the first reference position 101 to the second reference position 102.

As a premise of such a permission condition, when the offset operation is performed in the autonomous straight travel, there is a possibility that travel and work different from the desired autonomous straight travel according to the set reference orientation 103 are performed. Therefore, when the offset manipulation or the offset operation is performed between the first reference position 101 and the second reference position 102 on the travel route 104 to be updated, the reference information updating unit 38 does not update the first reference position 101 and the second reference position 102.

The reference information updating unit 38 may update the first reference position 101 and the second reference position 102 when another permission condition is satisfied in addition to the above-described permission condition.

Further, the reference information updating unit 38 may select a combination of the various permission conditions described above according to any manipulation by the worker, and may update the first reference position 101 and the second reference position 102 when the selected permission condition is satisfied.

For example, although an example in which the reference information updating unit 38 determines that the permission condition is not satisfied and does not update the first reference position 101 and the second reference position 102 when the offset manipulation or the offset operation is performed has been described above, even in a case where the offset operation is performed in the autonomous straight travel, there is a possibility that the travel and work are performed within a predetermined error range with respect to the desired autonomous straight travel according to the set reference orientation 103. Therefore, the reference information updating unit 38 may update the first reference position 101 and the second reference position 102 when another permission condition is satisfied without setting the fact that the offset manipulation or the offset operation is not performed as the permission condition.

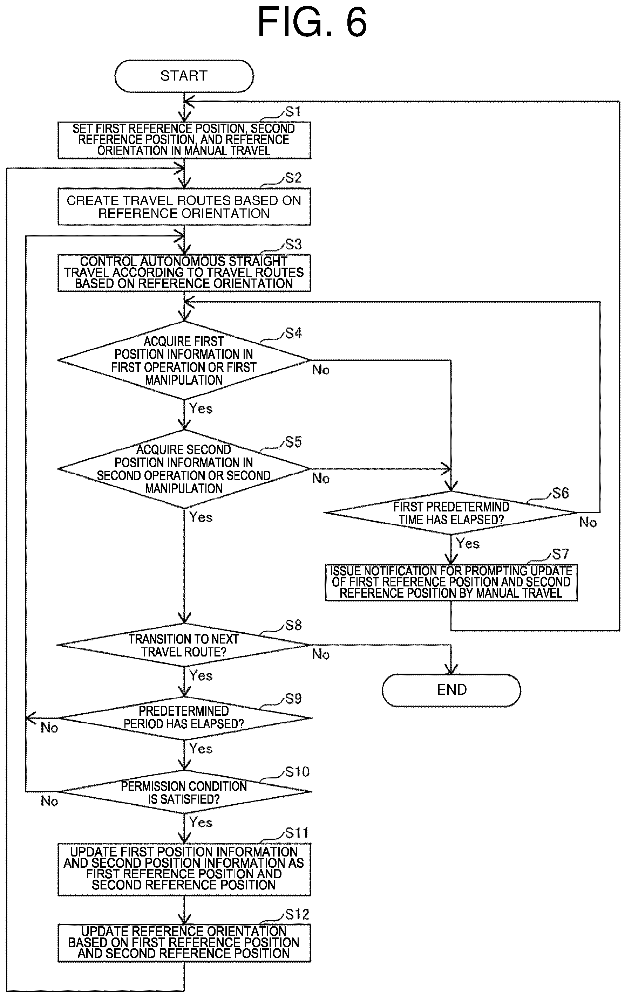

Next, an exemplary operation of the autonomous straight travel by the tractor 1 according to the present embodiment will be described with reference to a flowchart of FIG. 6. Although the work operation of the tractor 1 is performed in the field 100 as necessary, description thereof will be omitted below.

First, when the worker manipulates the first reference position manipulation unit 41 and the second reference position manipulation unit 42 while performing a manual travel of the tractor 1 using a manual manipulation, the reference information setting unit 35 sets the first reference position 101 and the second reference position 102, and sets the reference orientation 103 based on the first reference position 101 and the second reference position 102 (Step S1).

Then, the route creation unit 36 creates a plurality of travel routes 104 that are straight lines parallel to the set reference orientation 103 and are arranged at intervals of the work widths from the reference orientation 103 (Step S2).

Next, when the worker performs a starting manipulation of the autonomous straight travel, the autonomous traveling control unit 37 controls the autonomous straight travel according to the travel routes 104 based on the reference orientation 103 (Step S3).

When the first operation or the first manipulation of the tractor 1 is performed during the autonomous straight travel (Step S4: Yes), the reference information updating unit 38 acquires the first position information.

When the second operation or the second manipulation of the tractor 1 is performed during the autonomous straight travel (Step S5: Yes), the reference information updating unit 38 acquires the second position information.

When the second predetermined time elapses (Step S6: Yes) while the first position information is not acquired (Step S4: No) or the second position information is not acquired (Step S5: No), the reference information updating unit 38 issues notification for prompting update of the first reference position 101 and the second reference position 102 by manual travel using the display device 44 or the speaker 45 (Step S7). In this case, the process returns to Step S1, and the manual travel is performed again. Until the second predetermined time elapses, the reference information updating unit 38 waits for acquisition of the first position information and the second position information.

After the autonomous straight travel on the travel route 104 is ended, in a case where the tractor 1 does not transition to the next travel route 104 (Step S8: No), the operation of the autonomous straight travel by the tractor 1 is completed.

**In** the case of transitioning to the next travel route 104 (Step S8: Yes), the reference information updating unit 38 determines whether a predetermined period has elapsed (Step S9). Here, when the predetermined period does not elapse (Step S9: No), the process returns to Step S3 without updating the first reference position 101 and the second reference position 102, and transitions to autonomous straight travel on the next travel route 104.

When the predetermined period elapses (Step S9: Yes), the reference information updating unit 38 determines whether or not the permission condition is satisfied (Step S10). Here, when the permission condition is not satisfied (Step S10: No), the process returns to Step S3 without updating the first reference position 101 and the second reference position 102, and transitions to autonomous straight travel on the next travel route 104.

When the permission condition is satisfied (Step S10: Yes), the reference information updating unit 38 updates the first position information and the second position information as the first reference position 101 and the second reference position 102, respectively (Step S11). The reference information updating unit 38 updates the reference orientation 103 based on the updated first reference position 101 and second reference position 102 (Step S12).

Then, returning to Step S2, the route creation unit 36 creates the travel route 104 based on the updated reference orientation 103, and thereafter, in Step S3, the autonomous traveling control unit 37 performs the autonomous straight travel according to the travel route 104 based on the updated reference orientation 103 in response to the starting manipulation of the autonomous straight travel.

As described above, according to the present embodiment, the work vehicle is a tractor 1 that performs autonomous straight travel (autonomous travel) according to a reference orientation 103 set based on a first reference position 101 and a second reference position 102, and includes a reference information updating unit 38 that updates the first reference position 101 and the second reference position 102 when the autonomous straight travel is performed, and updates the reference orientation 103 based on the updated first reference position 101 and second reference position 102.

In other words, in the present invention, an autonomous traveling method for a work vehicle such as a tractor 1 that performs the autonomous straight travel (autonomous travel) according to a reference orientation 103 set based on a first reference position 101 and a second reference position 102, and includes an updating step that updates the first reference position 101 and the second reference position 102 when the autonomous straight travel is performed, and updates the reference orientation 103 based on the updated first reference position 101 and second reference position 102.

In the work vehicle such as the tractor 1, after the first reference position 101 and the second reference position 102 of which the position information is acquired by the positioning unit 15 are set, a deviation (drift) of the position information (coordinates) may occur with a lapse of time. In contrast, according to the present invention, the tractor 1 updates the first reference position 101 and the second reference position 102 and updates the reference orientation 103 when performing the autonomous straight travel, so that it is possible to suppress the occurrence of the autonomous straight travel that is not parallel or the autonomous straight travel that is not at equal intervals with respect to the travel trajectory when the reference orientation 103 is initially set or the travel trajectory of the actual autonomous straight travel based on the initially set reference orientation 103. In this way, it is possible to provide an autonomous traveling method and an autonomous traveling system for the work vehicle capable of performing appropriate autonomous straight travel based on the appropriate reference orientation 103 without being affected by a deviation in position information with a lapse of time.

According to the tractor 1 according to the present embodiment, the reference information updating unit 38 updates the first reference position 101 according to the first operation or the first manipulation of the tractor 1 and updates the second reference position 102 according to the second operation or the second manipulation of the tractor 1 when the autonomous straight travel is performed.

Accordingly, it is possible to reduce the burden on the worker by updating the first reference position 101 and the second reference position 102 in association with the operation and manipulation for the tractor 1 when the autonomous straight travel is performed. Alternatively, the reference information updating unit 38 may be able to update the first reference position 101 and the second reference position 102 according to the manipulation of the first reference position manipulation unit 41 and the second reference position manipulation unit 42 during the autonomous straight travel.

Further, according to the tractor 1 of the present embodiment, the reference information updating unit 38 updates the first reference position 101 and the second reference position 102 every predetermined period when the autonomous straight travel is performed.

Specifically, the reference information updating unit 38 updates the first reference position 101 and the second reference position 102 every time the autonomous straight travel is started as the predetermined period.

Alternatively, the reference information updating unit 38 updates the first reference position 101 and the second reference position 102 every time the autonomous straight travel on the predetermined number of routes based on the reference orientation 103 is ended and the autonomous straight travel on the next route is started as the predetermined period.

Alternatively, the reference information updating unit 38 updates the first reference position 101 and the second reference position 102 every time a first predetermined time elapses since the time of the previous setting of the first reference position 101 and the second reference position 102 as the predetermined period.

Accordingly, the first reference position 101 and the second reference position 102 are autonomously updated every predetermined period, so that the burden on the worker can be reduced. Further, when the autonomous straight travel is performed, by updating the first reference position 101 and the second reference position 102 every predetermined period and updating the reference orientation 103 accordingly, it is possible to suppress the occurrence of the autonomous straight travel that is not parallel or the autonomous straight travel that is not at equal intervals with respect to the travel trajectory when the reference orientation 103 is set initially or the travel trajectory of the actual autonomous straight travel based on the initially set reference orientation 103.

According to the tractor 1 of the present embodiment, when a second predetermined time longer than the first predetermined time elapses since the time of the previous setting of the first reference position 101 and the second reference position 102, the reference information updating unit 38 issues notification for prompting the update of the first reference position 101 and the second reference position 102 by manual travel.

Accordingly, when the second predetermined time elapses without updating the first reference position 101 and the second reference position 102 in the autonomous straight travel, and thus there is a possibility that the occurrence of the deviation of the position information measured by the positioning unit 15 cannot be suppressed, it is possible to prompt an operator to update the first reference position 101 and the second reference position 102 by the manual travel.

According to the tractor 1 of the present embodiment, the reference information updating unit 38 updates the first reference position 101 and the second reference position 102 when the predetermined permission condition is satisfied in performing the autonomous straight travel.

Accordingly, it is possible to prevent the first reference position 101 and the second reference position 102 from being updated by the position information acquired in an inappropriate state.

In the above-described embodiment, an example has been described in which the reference information setting unit 35, the route creation unit 36, and the reference information updating unit 38 are executed by the control device 4 included in the tractor 1 with respect to the setting, update, and the like of the data related to the autonomous straight travel, but the present invention is not limited to this example. For example, in another example, the reference information setting unit 35, the route creation unit 36, and the reference information updating unit 38 may be configured to be executed by a computer included in the mobile terminal 5.

That is, according to the present embodiment, the autonomous traveling system for the work vehicle such as the tractor 1 may include the reference information setting unit 35, the route creation unit 36, and the reference information updating unit 38, and here, the reference information setting unit 35, the route creation unit 36, and the reference information updating unit 38 may be executed by the control device 4 of the tractor 1 or may be executed by the computer in the mobile terminal 5.

The above embodiment has described an example that the work vehicle includes the tractor 1, but the present invention in not limited to this example. For example, the work vehicle according to the present invention may include other agricultural work machine such as a combine harvester, a rice transplanter, and mower, or may include a work vehicle other than the agricultural work machine.

Note that the present invention can be appropriately changed unless contrary to gist or spirit of the present disclosure that can be read out from the claims and the whole specification, and an autonomous traveling method, a work vehicle, and an autonomous traveling system accompanied by such a change are also included in the spirit of the present invention.

### Supplementary Notes of the Invention

Hereinafter, an outline of the invention extracted from the above-described embodiment will be described in supplementary notes. Note that components and processing functions described in the following supplementary notes can be arbitrary selected and combined.

### Supplementary Note 1

An autonomous traveling method for a work vehicle that performs autonomous travel according to a reference orientation set based on a first reference position and a second reference position, the method including:
an updating step of updating the first reference position and the second reference position when the autonomous travel is performed, and updating the reference orientation based on the updated first reference position and second reference position.

### Supplementary Note 2

The autonomous traveling method according to Supplementary Note 1, wherein in the updating step, when the autonomous travel is performed, the first reference position is updated according to a first operation or a first manipulation for the work vehicle, and the second reference position is updated according to a second operation or a second manipulation for the work vehicle.

### Supplementary Note 3

The autonomous traveling method according to Supplementary Note 1 or 2, wherein in the updating step, the first reference position and the second reference position are updated every predetermined period when the autonomous travel is performed.

### Supplementary Note 4

The autonomous traveling method according to Supplementary Note 3, wherein in the updating step, the first reference position and the second reference position are updated every time the autonomous travel is started as the predetermined period.

### Supplementary Note 5

The autonomous traveling method according to Supplementary Note 3, wherein in the updating step, the first reference position and the second reference position are updated every time the autonomous travel on a predetermined number of routes based on the reference orientation is ended and the autonomous travel on a next route is started as the predetermined period.

### Supplementary Note 6

The autonomous traveling method according to Supplementary Note 3, wherein in the updating step, the first reference position and the second reference position are updated every time a first predetermined time elapses since a previous setting time of the first reference position and the second reference position as the predetermined period.

### Supplementary Note 7

The autonomous traveling method according to Supplementary Note 6, wherein, in the updating step, when a second predetermined time longer than the first predetermined time elapses since the previous setting of the first reference position and the second reference position, notification for prompting update of the first reference position and the second reference position by manual travel is issued.

### Supplementary Note 8

The autonomous traveling method according to any one of Supplementary Notes 1 to 7, wherein in the updating step, the first reference position and the second reference position are updated in a case where a predetermined permission condition is satisfied when the autonomous travel is performed.

### Supplementary Note 9

A work vehicle that performs autonomous travel according to a reference orientation set based on a first reference position and a second reference position, the work vehicle including:
a reference information updating unit that updates the first reference position and the second reference position when the autonomous travel is performed, and updates the reference orientation based on the updated first reference position and second reference position.

### Supplementary Note 10

The work vehicle according to Supplementary Note 9, wherein the reference information updating unit updates the first reference position according to a first operation or a first manipulation for the work vehicle and updates the second reference position according to a second operation or a second manipulation for the work vehicle when the autonomous travel is performed.

### Supplementary Note 11

The work vehicle according to Supplementary Note 9 or 10, wherein the reference information updating unit updates the first reference position and the second reference position every predetermined period when the autonomous travel is performed.

### Supplementary Note 12

The work vehicle according to Supplementary Note 11, wherein the reference information updating unit updates the first reference position and the second reference position every time the autonomous travel is started as the predetermined period.

### Supplementary Note 13

The work vehicle according to Supplementary Note 11, wherein the reference information updating unit updates the first reference position and the second reference position every time the autonomous travel on a predetermined number of routes based on the reference orientation is ended and the autonomous travel on a next route is started as the predetermined period.

### Supplementary Note 14

The work vehicle according to Supplementary Note 11, wherein the reference information updating unit updates the first reference position and the second reference position every time a first predetermined time elapses since a previous setting time of the first reference position and the second reference position as the predetermined period.

### Supplementary Note 15

The work vehicle according to Supplementary Note 14, wherein, the reference information updating unit issues notification for prompting update of the first reference position and the second reference position by manual travel, when a second predetermined time longer than the first predetermined time elapses since the previous setting of the first reference position and the second reference position.

### Supplementary Note 16

The work vehicle according to any one of Supplementary Notes 9 to 15, wherein the reference information updating unit updates the first reference position and the second reference position in a case where a predetermined permission condition is satisfied when the autonomous travel is performed.

### Supplementary Note 17

An autonomous traveling system for a work vehicle that performs autonomous travel according to a reference orientation set based on a first reference position and a second reference position, the autonomous traveling system including:
a reference information updating unit that updates the first reference position and the second reference position when the autonomous travel is performed, and updates the reference orientation based on the updated first reference position and second reference position.

### Supplementary Note 18

The autonomous traveling system according to Supplementary Note 17, wherein the reference information updating unit updates the first reference position according to a first operation or a first manipulation for the work vehicle, and updates the second reference position according to a second operation or a second manipulation for the work vehicle when the autonomous travel is performed.

### Supplementary Note 19

The autonomous traveling system according to Supplementary Note 17 or 18, wherein the reference information updating unit updates the first reference position and the second reference position every predetermined period when the autonomous travel is performed.

### Supplementary Note 20

The autonomous traveling system according to Supplementary Note 19, wherein the reference information updating unit updates the first reference position and the second reference position every time the autonomous travel is started as the predetermined period.

### Supplementary Note 21

The autonomous traveling system according to Supplementary Note 19, wherein the reference information updating unit updates the first reference position and the second reference position every time the autonomous travel on a predetermined number of routes based on the reference orientation is ended and the autonomous travel on a next route is started as the predetermined period.

### Supplementary Note 22

The autonomous traveling system according to Supplementary Note 19, wherein the reference information updating unit updates the first reference position and the second reference position every time a first predetermined time elapses since a previous setting time of the first reference position and the second reference position as the predetermined period.

### Supplementary Note 23

The autonomous traveling system according to Supplementary Note 22, wherein the reference information updating unit issues notification for prompting update of the first reference position and the second reference position by manual travel when a second predetermined time longer than the first predetermined time elapses since the previous setting of the first reference position and the second reference position.

### Supplementary Note 24

The autonomous traveling system according to any one of Supplementary Notes 17 to 23, wherein the reference information updating unit updates the first reference position and the second reference position in a case where a predetermined permission condition is satisfied when the autonomous travel is performed.

### REFERENCE SIGNS LIST

1 tractor (work vehicle)
2 vehicle body
3 work machine
4 control device
5 mobile terminal
15 positioning unit
31 storage unit
32 communication unit
35 reference information setting unit
36 route creation unit
37 autonomous traveling control unit
38 reference information updating unit
41 first reference position manipulation unit
42 second reference position manipulation unit
43 offset button
44 display device
45 speaker
100 field
101, 101' first reference position
102, 102' second reference position
103, 103' reference orientation
104, 104' travel route

## Claims

1. An autonomous traveling method for a work vehicle that performs autonomous travel according to a reference orientation set based on a first reference position and a second reference position, the method comprising:
an updating step of updating the first reference position and the second reference position when the autonomous travel is performed, and updating the reference orientation based on the updated first reference position and second reference position.

2. The autonomous traveling method according to claim 1, wherein in the updating step, when the autonomous travel is performed, the first reference position is updated according to a first operation or a first manipulation for the work vehicle, and the second reference position is updated according to a second operation or a second manipulation for the work vehicle.

3. The autonomous traveling method according to claim 1, wherein in the updating step, the first reference position and the second reference position are updated every predetermined period when the autonomous travel is performed.

4. The autonomous traveling method according to claim 3, wherein in the updating step, the first reference position and the second reference position are updated every time the autonomous travel is started as the predetermined period.

5. The autonomous traveling method according to claim 3, wherein in the updating step, the first reference position and the second reference position are updated every time the autonomous travel on a predetermined number of routes based on the reference orientation is ended and the autonomous travel on a next route is started as the predetermined period.

6. The autonomous traveling method according to claim 3, wherein in the updating step, the first reference position and the second reference position are updated every time a first predetermined time elapses since a previous setting time of the first reference position and the second reference position as the predetermined period.

7. The autonomous traveling method according to claim 6, wherein, in the updating step, when a second predetermined time longer than the first predetermined time elapses since the previous setting of the first reference position and the second reference position, notification for prompting update of the first reference position and the second reference position by manual travel is issued.

8. The autonomous traveling method according to claim 1, wherein in the updating step, the first reference position and the second reference position are updated in a case where a predetermined permission condition is satisfied when the autonomous travel is performed.

9. A work vehicle that performs autonomous travel according to a reference orientation set based on a first reference position and a second reference position, the work vehicle comprising:
a reference information updating unit that updates the first reference position and the second reference position when the autonomous travel is performed, and updates the reference orientation based on the updated first reference position and second reference position.

10. An autonomous traveling system for a work vehicle that performs autonomous travel according to a reference orientation set based on a first reference position and a second reference position, the autonomous traveling system comprising:
a reference information updating unit that updates the first reference position and the second reference position when the autonomous travel is performed, and updates the reference orientation based on the updated first reference position and second reference position.
